(19) Europäisches Patentamt
European Patent Office
Office européen des brevets

(11) EP 4 109 075 A1

(12) EUROPEAN PATENT APPLICATION
published in accordance with Art. 153(4) EPC

(43) Date of publication:
28.12.2022 Bulletin 2022/52

(51) International Patent Classification (IPC):
G01N 21/27 (2006.01)      G01N 21/64 (2006.01)

(21) Application number: 20919516.3

(52) Cooperative Patent Classification (CPC):
G01N 21/27; G01N 21/64

(22) Date of filing: 28.09.2020

(86) International application number:
PCT/JP2020/036556

(87) International publication number:
WO 2021/166310 (26.08.2021 Gazette 2021/34)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.02.2020   JP 2020027514

(71) Applicant: SHIMADZU CORPORATION
Kyoto-shi, Kyoto 604-8511 (JP)

(72) Inventors:
• WATANABE, Yasuyuki
  Kyoto-shi, Kyoto 604-8511 (JP)
• TAMAKI, Takahiro
  Kyoto-shi, Kyoto 604-8511 (JP)

(74) Representative: Müller-Boré & Partner
Patentanwälte PartG mbB
Friedenheimer Brücke 21
80639 München (DE)

(54) PHOTOREACTION EVALUATION DEVICE AND PHOTON COUNT CALCULATION METHOD

(57) An intensity distribution acquirer acquires a first detected intensity distribution detected by a detector with a sample position at which a sample is not present irradiated with light by a standard light source, and acquires a second detected intensity distribution detected by the detector with the sample position at which a sample is not present irradiated with light by an irradiation light source during a first measuring work. An irradiation intensity calculator calculates a radiation intensity at each wavelength of irradiation light of the irradiation light source based on the first detected intensity distribution, the second detected intensity distribution and radiation characteristics of the standard light source. An irradiation photon count calculator calculates an irradiation photon count at each wavelength of irradiation light of the irradiation light source based on an irradiation intensity at each wavelength.

FIG. 2

EP 4 109 075 A1

**Description**

[Technical Field]

The present invention relates to a photoreaction evaluation device and a photon count calculation method.

[Background Art]

When a sample is irradiated with light by an excitation light source, other substances, fluorescence or the like are generated. Such a phenomenon is referred to as a photochemical reaction. Quantum yield is used as an evaluation index for a photochemical reaction. The quantum yield is represented by (the number of molecules of a substance generated in a sample by irradiation with light) / (the number of photons absorbed by a sample). In the present specification, an excitation light source is referred to as an irradiation light source.

In order to calculate the quantum yield, it is necessary to measure the number of photons absorbed by a sample. In this case, the number of photons of light with which a sample is irradiated by the irradiation light source (hereinafter referred to as an irradiation photon count) is different depending on an irradiation light source. Therefore, the irradiation photon count needs to be calibrated.

As such, a method of calibrating an irradiation photon count using a chemiluminometer having a known absorbed photon count per chemical reaction at a specific wavelength has been suggested. Further, a method of calibrating an irradiation photon count using an optical power meter that measures energy of light has been proposed. For example, in the background art of Patent Document 1, a method of calibrating an irradiation photon count using a chemiluminometer or an optical power meter is described.

[Patent Document 1] JP 2015-34717 A

[Summary of Invention]

[Technical Problem]

However, an irradiation photon count varies depending on a wavelength of light. Therefore, it is necessary to calibrate an irradiation photon count using a chemiluminometer corresponding to a wavelength of light of an irradiation light source. In this case, since an absorption peak acquired by the chemiluminometer is somewhat broad, it is difficult to accurately measure an irradiation photon count at each wavelength. Since an optical power meter cannot usually measure a wavelength distribution of energy of light, it is difficult to accurately calibrate a wavelength distribution of the irradiation photon count. Therefore, in a case in which an irradiation light source that generates light in a wide wavelength range is used for a photochemical reaction, it is difficult to accurately calibrate a distribution of an irradiation photon count in the wide wavelength range.

The present invention is to provide a photoreaction evaluation device and a photon count calculation method that enable accurate calculation of a distribution of an irradiation photon count depending on a wavelength not only in a case in which an irradiation light source that generates light having a specific wavelength is used but also in a case in which an irradiation light source that generates light having a wide wavelength range is used.

[Solution to Problem]

A photoreaction evaluation device according to one aspect of the present invention that evaluates photoreaction of a sample arranged at a sample position, includes an irradiation light source arranged to be capable of irradiating the sample position with light as irradiation light and provided to be replaceable with a standard light source that generates white light, a spectrophotometer that includes a measurement light source arranged to be capable of irradiating the sample position with light and a detector arranged to detect an intensity distribution of light that has passed through the sample position, an intensity distribution acquirer that acquires an intensity distribution of light detected by the detector with the sample position at which a sample is not present irradiated with light by the standard light source and with the sample position not irradiated with light by the measurement light source as a first detected intensity distribution, and acquires an intensity distribution of light detected by the detector with the sample position at which a sample is not present irradiated with light by the irradiation light source as irradiation light and with the sample position not irradiated with light by the measurement light source during a first measuring work, a radiation intensity calculator that calculates a radiation intensity at each wavelength of irradiation light of the irradiation light source based on a first detected intensity distribution acquired by the intensity distribution acquirer and a second detected intensity distribution acquired by the intensity distribution acquirer and irradiation characteristics of the standard light source, and an irradiation photon count calculator that calculates a count of photons at each wavelength of irradiation light of the irradiation light source as an irradiation photon count based on a radiation intensity at each wavelength calculated by the radiation intensity calculator.

A photon count calculation method according to another aspect of the present invention performed in a photoreaction evaluation device that evaluates photoreaction in regard to a sample arranged at a sample position includes the steps of acquiring an intensity distribution of light detected by a detector of a spectrophotometer with the sample position at which a sample is not present irradiated with light by a standard light source that generates white light and with the sample position not irradiated with light by a measurement light source of the spectrophotometer as a first detected intensity distribution, acquiring an intensity distribution of light detected by the detector with the sample position at which a sample is not present irradiated with light by an irradiation light source and with the sample position not irradiated with light by the measurement light source during a first measuring work, calculating a radiation intensity at each wavelength of irradiation light of the irradiation light source based on the acquired first detected intensity distribution, the acquired second detected intensity distribution and radiation characteristics of the standard light source, and calculating a count of photons at each wavelength of irradiation light of the irradiation light source based on the calculated radiation intensity at each wavelength.

[Advantageous Effects of Invention]

With the present invention, it is possible to accurately calculate a distribution of an irradiation photon count depending on a wavelength not only in a case in which an irradiation light source that generates light having a specific wavelength is used but also in a case in which an irradiation light source that generates light having a wide wavelength range is used.

[Brief Description of the Drawings]

[FIG. 1] Fig. 1 is a block diagram showing the configuration of a photoreaction evaluation device according to one embodiment.
[FIG. 2] Fig. 2 is a block diagram showing the functional configuration of a data processor of Fig. 1.
[FIG. 3] Fig. 3 is a flowchart showing a photoreaction evaluating work of the data processor of Fig. 2.
[FIG. 4] Fig. 4 is a flowchart showing the photoreaction evaluating work of the data processor of Fig. 2.
[FIG. 5] Fig. 5 is a diagram for explaining a standard data acquiring work.
[FIG. 6] Fig. 6 is a diagram showing an example of a first detected intensity distribution acquired by the standard data acquiring work.
[FIG. 7] Fig. 7 is a diagram for explaining a first measuring work.
[FIG. 8] Fig. 8 is a diagram showing an example of a second detected intensity distribution acquired by the first measuring work.
[FIG. 9] Fig. 9 is a diagram for explaining a method of calculating a radiation intensity at each wavelength of an irradiation light source.

[Description of Embodiments]

A photoreaction evaluation device and a photon count calculation method according to embodiments of the present invention will be described below in detail with reference to the drawings.

(1) Configuration of Photoreaction Evaluation Device

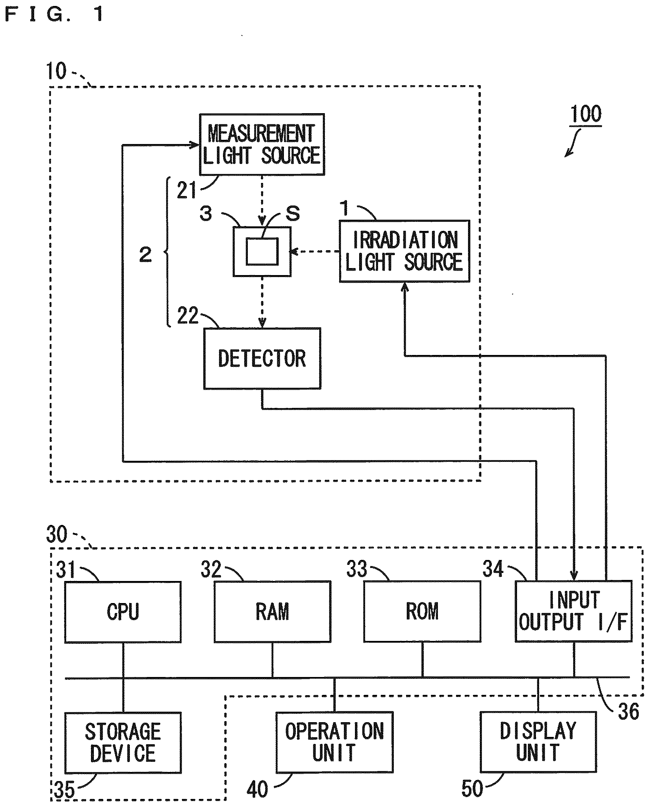

Fig. 1 is a block diagram showing the configuration of a photoreaction evaluation device according to one embodiment. The photoreaction evaluation device 100 of Fig. 1 includes a measurer 10 and a data processor 30. The measurer 10 includes an irradiation light source 1, a spectrophotometer 2 and a sample cell 3. A sample S is set in the sample cell 3. In the present embodiment, the position of the sample cell 3 corresponds to a sample position. Further, in the present embodiment, evaluation of photoreaction in regard to the sample S includes evaluation of an absorbed photon count in photochemical reaction of the sample S.

The irradiation light source 1 irradiates the sample cell 3 with light as excitation light. As the irradiation light source 1, a light source that generates light of a specific wavelength, light in a specific wavelength range, light of multiple wavelengths or white light can be used. The irradiation light source 1 may be various light sources such as an LED (light-emitting diode), a xenon lamp, a mercury lamp or a deuterium lamp. The spectrophotometer 2 includes a measurement light source 21, a spectrometer (not shown) and a detector 22. In the present embodiment, a multi-channel spectrophotometer 2 using a polychromator can be used, for example.

The data processor 30 includes a CPU (Central Processing Unit) 31, a RAM (Random Access Memory) 32, a ROM (Read Only Memory) 33, an input/output interface (I/F) 34 and a storage device 35. The CPU 31, the RAM 32, the ROM 33 the input output I/F 34 and the storage device 35 are connected to a bus 36. An operation unit 40 and a display unit 50 are connected to the bus 36 of the data processor 30. The operation unit 40 includes a keyboard, a mouse or the like and is operated by a user for an input of various instructions and data to the data processor 30. The display unit 50 includes a liquid crystal display, an organic EL (Electroluminance) display or the like and displays various data, etc.

The storage device 35 includes a storage medium such as a semiconductor memory or a memory card and stores a photoreaction evaluation program. The RAM 32 is used as a work area for the CPU 31. A system program is stored in the ROM 33. The CPU 31 controls the irradiation light source 1 and the spectrophotometer 2 through the input output I/F 34 by executing the photoreaction evaluation program stored in the storage device 35 on the RAM 32, and receives an output signal of the spectrophotometer 2 through the input output I/F 34. Thus, the photoreaction evaluation method described below is performed. The photoreaction evaluation method includes a photon count calculation method.

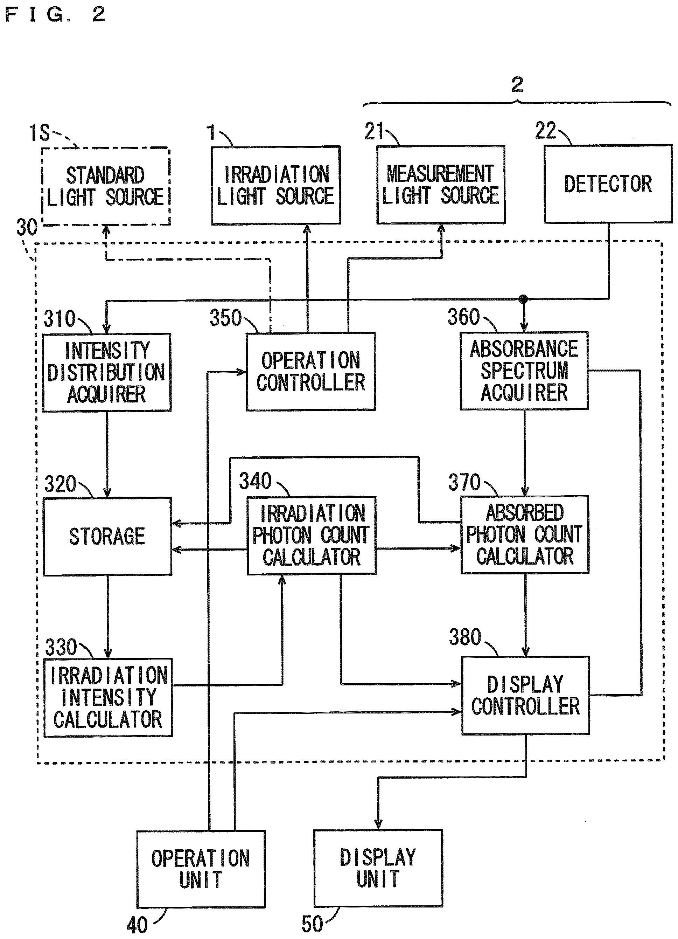

The photoreaction evaluation device 100 performs a standard data acquiring work using a standard light source 1S (Fig. 2), described below, a first measuring work using the irradiation light source 1 and a second measuring work of measuring the sample S.

(2) Functional Configuration of Data Processor 30

Fig. 2 is a block diagram showing the functional configuration of the data processor 30 of Fig. 1. As shown in Fig. 2, the data processor 30 includes an intensity distribution acquirer 310, a storage 320, a radiation intensity calculator 330, an irradiation photon count calculator 340, a work controller 350, an absorbance spectrum acquirer 360, an absorbed photon count calculator 370 and a display controller 380. The functions of the above-mentioned constituent elements (310 to 380) are implemented by execution of the photoreaction evaluation program which is a computer program stored in a storage medium (recording medium) such as the storage device 35 by the CPU 31 of Fig. 1. Part or all of the constituent elements of the data processor 30 may be implemented by hardware such as an electronic circuit.

During the standard data acquiring work, the standard light source 1S indicated by the one-dot and dash line in Fig. 2 is attached to the measurer (Fig. 1) instead of the irradiation light source 1. The standard light source 1S is a light source that generates light having a wavelength range equal to or larger than a wavelength range of light generated by the irradiation light source 1. A white light source is used as the standard light source 1S. While the white light source is an LED that generates white light, for example, another white light source may be used. The standard light source 1S is a light source that generates light in a wide wavelength range. Hereinafter, a radiation intensity distribution of all wavelengths of light generated by the standard light source 1S is referred to as radiation characteristics of the standard light source 1S. The radiation characteristics include a radiation intensity at each wavelength of light generated by the standard light source 1S. The radiation characteristics of the standard light source 1S are accurately measured in advance. Because the spectrophotometer 2 has wavelength-dependent wavelength-sensitivity distribution characteristics, the radiation intensity distribution of light generated by the standard light source 1S and the intensity distribution detected by the spectrophotometer 2 of light emitted by the standard light source 1S are usually different.

During the standard data acquiring work, the intensity distribution acquirer 310 acquires an intensity distribution of light detected by the detector 22 of the spectrophotometer 2 as a first detected intensity distribution. The first detected intensity distribution is an intensity distribution of light detected at all wavelengths of white light with which the sample cell 3 is irradiated by the standard light source 1S. Further, during the first measuring work, the intensity distribution acquirer 310 acquires an intensity distribution of light detected by the detector 22 of the spectrophotometer 2 as a second detected intensity distribution. The second detected intensity distribution is an intensity distribution of light detected in a wavelength range of light with which the sample cell 3 is irradiated by the irradiation light source 1. In a case in which the irradiation light source 1 is a white light source, the second detected intensity distribution is an intensity distribution of light detected at all wavelengths. In a case in which the irradiation light source 1 is a light source that generates light of a specific wavelength or light in a specific wavelength range, the second detected intensity distribution is an intensity distribution of light detected at the specific wavelength or in the specific wavelength range.

The storage 320 stores the first detected intensity distribution acquired by the intensity distribution acquirer 310 during acquisition of standard data and the second detected intensity distribution acquired by the intensity distribution acquirer 310 during the first measuring work. Further, the storage 320 stores radiation characteristics of the standard light source 1S in advance. Further, the storage 320 stores an irradiation photon count calculated by an irradiation photon count calculator 340, described below, and an absorbed photon count calculated by the absorbed photon count calculator 370.

During the first measuring work, the radiation intensity calculator 330 calculates a radiation intensity at each wavelength of the irradiation light source 1 based on the first detected intensity distribution, the second detected intensity distribution and the radiation intensity at each wavelength of the standard light source 1S that are stored in the storage 320. Details of the calculation method will be described below.

The irradiation photon count calculator 340 calculates a photon count of light with which the sample cell 3 is irradiated by the irradiation light source 1 (hereinafter referred to as an irradiation photon count) based on a radiation intensity at each wavelength calculated by the radiation intensity calculator 330. Details of the calculation method will be described below.

In order to perform the standard data acquiring work, the first measuring work and the second measuring work based on an operation of the operation unit 40 by the user, the work controller 350 controls the work of each constituent element of the data processor 30 and also controls the work of the standard light source 1S, the irradiation light source 1 and the measurement light source 21 of the spectrophotometer 2.

The absorbance spectrum acquirer 360 acquires an intensity distribution of light detected by the detector 22 of the spectrophotometer 2 as an absorbance spectrum during the second measuring work. The absorbed photon count calculator 370 calculates an absorbed photon count at each wavelength based on an absorbance spectrum acquired by the absorbance spectrum acquirer 360 and an irradiation photon count calculated by the irradiation photon count calculator 340. Details of the calculation method will be described below.

The display controller 380 causes the display unit 50 to display an irradiation photon count calculated by the irradiation photon count calculator 340, an absorbed photon count calculated by the absorbed photon count calculator 370 and an absorbance spectrum acquired by the absorbance spectrum acquirer 360 based on an operation of the operation unit 40.

(3) Work of Photoreaction Evaluation Device 100

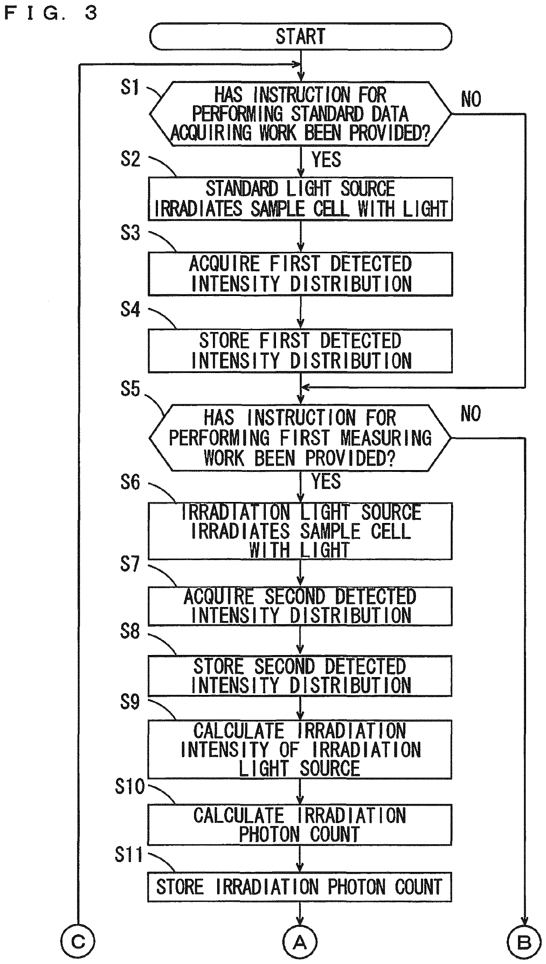

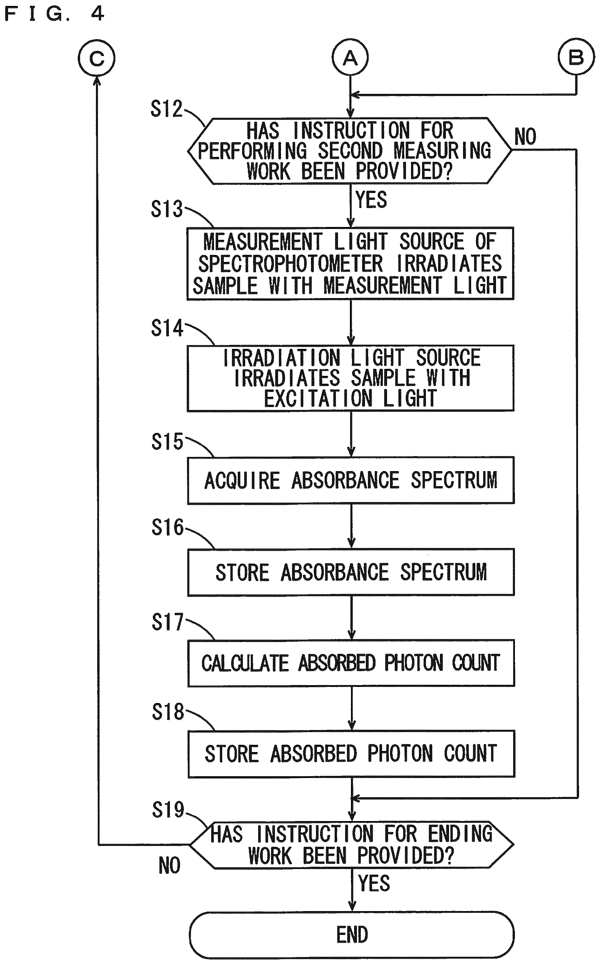

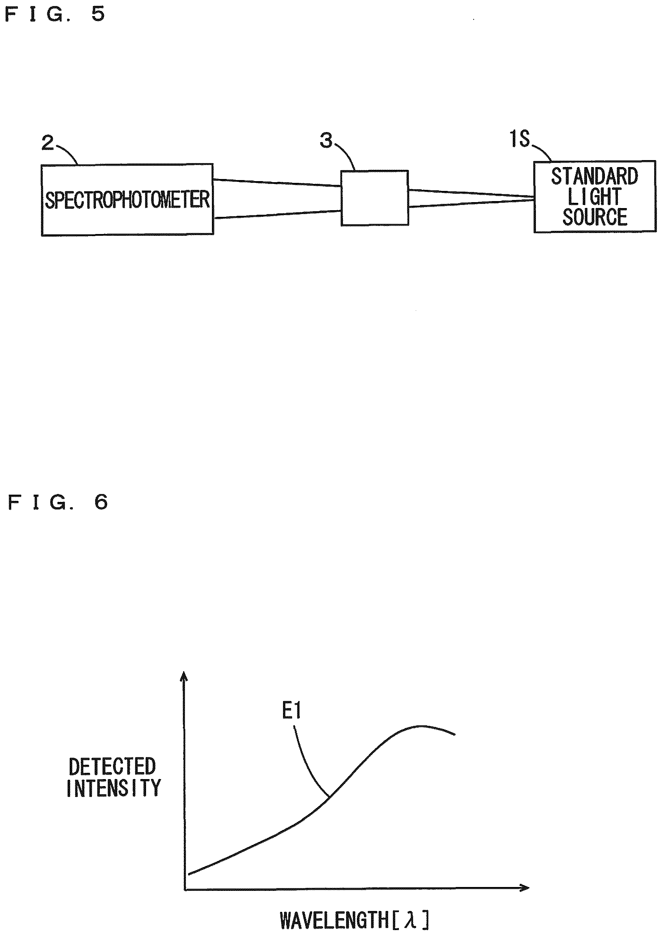

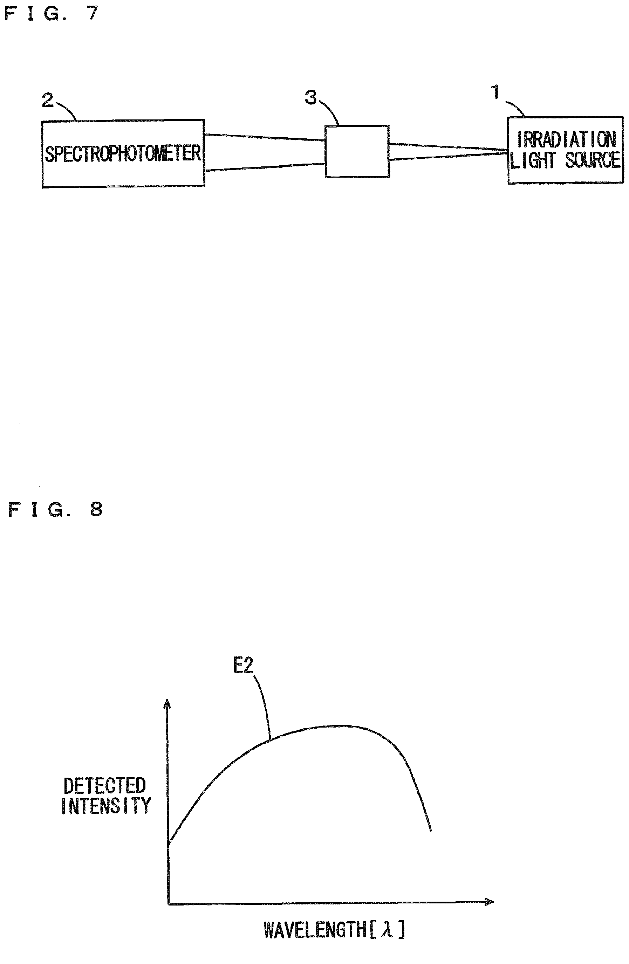

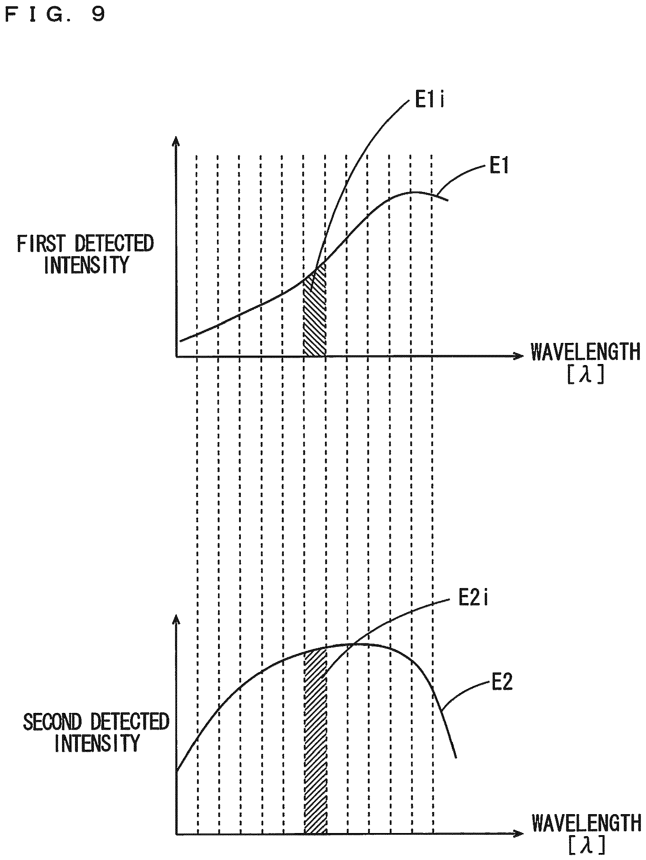

Figs. 3 and 4 are flowcharts showing a photoreaction evaluating work of the data processor 30 of Fig. 2. Fig. 5 is a diagram for explaining the standard data acquiring work. Fig. 6 is a diagram showing an example of a first detected intensity distribution acquired by the standard data acquiring work. Fig. 7 is a diagram for explaining the first measuring work. Fig. 8 is a diagram showing an example of a second detected intensity distribution acquired by the first measuring work. Fig. 9 is a diagram for explaining a method of calculating a radiation intensity at each wavelength of the irradiation light source 1. In each of Figs. 6, 8 and 9, the ordinate indicates a detected intensity at each wavelength detected by the spectrophotometer 2, and the abscissa indicates a wavelength $\lambda$.

The photoreaction evaluating work of the photoreaction evaluation device 100 includes the standard data acquiring work, the first measuring work and the second measuring work as described above. The photoreaction evaluating work of Figs. 3 and 4 is performed when the CPU 31 of Fig. 2 executes the photoreaction evaluation program.

The standard data acquiring work is performed during installation or maintenance of the photoreaction evaluation device 100, for example. Here, standard data includes a first detected intensity distribution and radiation characteristics (a radiation intensity at each wavelength) of the standard light source 1S. The first measuring work is performed on a daily basis, for example. The second measuring work is performed when the sample S is measured.

During the standard data acquiring work, a worker attaches the standard light source 1S to the operation unit 40 instead of the irradiation light source 1. The sample S is not set in the sample cell 3. The work controller 350 determines whether an instruction for performing the standard data acquiring work has been provided by the operation unit 40 (step S1). In a case in which an instruction for performing the standard data acquiring work has been provided, the work controller 350 controls the standard light source 1S such that the standard light source 1S irradiates the sample cell 3 with light (step S2). Thus, as shown in Fig. 5, the sample cell 3 is irradiated with light emitted by the standard light source 1S, and the light from the sample cell 3 enters the spectrophotometer 2. At this time, the sample cell 3 is not irradiated with light from the measurement light source 21 of the spectrophotometer 2.

The intensity distribution acquirer 310 acquires an intensity distribution of light detected by the detector 22 of the spectrophotometer 2 as a first detected intensity distribution (step S3). In Fig. 6, the relationship between a detected intensity and a wavelength $\lambda$ is shown as a first detected intensity distribution E1. The intensity distribution acquirer 310 stores the acquired first detected intensity distribution E1 in the storage 320 (step S4). Thus, the standard data acquiring work is completed.

During the first measuring work, the user attaches the irradiation light source 1 to the measurer 10. The sample S is not set in the sample cell 3. The work controller 350 determines whether an instruction for performing the first measuring work has been provided by the operation unit 40 (step S5). In a case in which an instruction for performing the first measuring work has been provided, the work controller 350 controls the irradiation light source 1 such that the irradiation light source 1 irradiates the sample cell 3 with light (step S6). Thus, as shown in Fig. 7, the sample cell 3 is irradiated with light emitted from the irradiation light source 1, and light that has passed through the sample cell 3 enters the spectrophotometer 2. At this time, the sample cell 3 is not irradiated with light from the measurement light source 21 of the spectrophotometer 2.

The intensity distribution acquirer 310 acquires an intensity distribution of light detected by the detector 22 of the spectrophotometer 2 as a second detected intensity distribution (step S7). In Fig. 8, the relationship between a detected intensity and a wavelength $\lambda$ is shown as a second detected intensity distribution E2. The intensity distribution acquirer 310 stores the acquired second detected intensity distribution E2 in the storage 320 (step S8).

The radiation intensity calculator 330 calculates a radiation intensity at each wavelength of the irradiation light source 1 using the following method based on the first detected intensity distribution E1, the second detected intensity distribution E2 and the radiation characteristics of the standard light source 1S that are stored in the storage 320 (step S9). In the present example, each wavelength means each of constant wavelength intervals into which a wavelength is divided by a specific pitch.

Letting the radiation characteristics of the standard light source 1S be Fstd, and letting the wavelength-sensitivity distribution characteristics of the spectrophotometer 2 be Fmono, the first detected intensity distribution E1 is expressed by the following formula.

$$E1 = Fstd \times Fmono \cdots (1)$$

Letting the radiation characteristics of the irradiation light source 1 be Firr, the second detected intensity distribution E2 is expressed by the following formula. Here, the radiation characteristics Firr of the irradiation light source 1 represent a radiation intensity distribution of light generated by the irradiation light source 1. The radiation characteristics Firr include a radiation intensity at each wavelength of the irradiation light source 1.

$$E2 = Firr \times Fmono \cdots (2)$$

The following formula is obtained based on the above-mentioned formulas (1) and (2).

$$E1 / E2 = (Fstd \times Fmono) / (Firr \times Fmono) \cdots (3)$$

The following formula is obtained based on the above-mentioned formula (3).

$$Firr = (E2 / E1) \times Fstd \cdots (4)$$

The first detected intensity distribution E1 and the radiation characteristics Fstd of the standard light source 1S are known. Therefore, it is possible to calculate the radiation characteristics Firr of the irradiation light source 1 with the above-mentioned formula (4) by obtaining the second detected intensity distribution E2 of the irradiation light source 1 with use of the spectrophotometer 2 capable of detecting the intensity of light at each wavelength. Thus, it is possible to obtain the radiation intensity at each wavelength not only in regard to a light source that generates light of a specific wavelength but also in regard to a light source that generates light in a specific wavelength range, a light source that generates light of multiple wavelengths and a light source that generates white light.

Specifically, the radiation intensity calculator 330 can calculate a radiation intensity at each wavelength of the irradiation light source 1 using the following method.

As shown in Fig. 9, the first detected intensity distribution E1 and the second detected intensity distribution E2 are divided into a plurality of wavelength intervals by a constant wavelength pitch. The radiation intensity calculator 330 calculates the areas under the first and second detected intensity distributions E1 and E2 in each wavelength interval. In Fig. 9, the area under the first detected intensity distribution E1 in any wavelength interval of the first detected intensity distribution E1 is E1i, and the area under the second detected intensity distribution E2 in any wavelength interval of the second detected intensity distribution E2 is E2i. 'i' is a natural number. In this case, the area in the plurality of wavelength intervals of the first detected intensity distribution E1 are E11, E12, ···, E1i, ···. The areas in the plurality of wavelength intervals of the second detected intensity distribution E2 are E21, E22, ···, E2i, ···. Further, a radiation intensity of the standard light source 1S in any wavelength interval is Fstdi.

The radiation intensity calculator 330 calculates the radiation intensity Firri of the irradiation light source 1 in any wavelength interval using the following formula (step S9).

$$Firri = (E2i / E1i) \times Fstdi \cdots (5)$$

An irradiation photon count Nirr ($\lambda$) at a wavelength $\lambda$ is defined by the following formula based on the Einstein energy equation with use of a Planck constant h, a light speed c and a radiation intensity Firri. In the present embodiment, a wavelength $\lambda$ corresponds to an i-th wavelength interval.

$$Nirr (\lambda) = (\lambda / hc) \times Firri \cdots (6)$$

The irradiation photon count calculator 340 calculates an irradiated photon count Nirr ($\lambda$) at each wavelength $\lambda$ using the above-mentioned formula (6) with use of a radiation intensity Firri in each wavelength interval calculated with use of the above-mentioned formula (5) (step S10). The irradiation photon count calculator 340 stores the calculated irradiation photon count Nirr ($\lambda$) at each wavelength $\lambda$ in the storage 320 (step S11). Thus, the first measuring work is completed.

During the second measuring work, the user sets the sample S in the sample cell 3 of the measurer 10 (Fig. 1). The work controller 350 determines whether an instruction for performing the second measuring work has been provided by the operation unit 40 (step S12). In a case in which an instruction for performing the second measuring work has been provided, the work controller 350 controls the measurement light source 21 such that the measurement light source 21 of the spectrophotometer 2 irradiates the sample in the sample cell 3 with light as measurement light (step S13). Further, the work controller 350 controls the irradiation light source 1 such that the irradiation light source 1 irradiates the sample in the sample cell 3 with light as excitation light (step S14). Thus, photons of excitation light emitted by the irradiation light source 1 are absorbed by the sample S, and a photochemical reaction occurs. In this case, the absorbed photon count depends on a wavelength $\lambda$. The detector 22 of the spectrophotometer 2 detects an intensity distribution of light that has passed through the sample S.

The absorbance spectrum acquirer 360 acquires an intensity distribution of light detected by the detector 22 of the spectrophotometer 2 as an absorbance spectrum (step S15). Further, the absorbance spectrum acquirer 360 stores the acquired absorbance spectrum in the storage 320 (step S16). During a measurement period, the sample S is irradiated with excitation light having the irradiation photon count Nirr ($\lambda$) by the irradiation light source 1. A photochemical reaction proceeds in accordance with this irradiation photon count Nirr ($\lambda$). Therefore, the absorbance spectrum acquirer 360 acquires an absorbance spectrum which is time-series data. Here, an absorbance spectrum at the point t in time is Abs (t, $\lambda$). Further, the number of photons absorbed by the sample S at the wavelength $\lambda$ at the point t in time is an absorbed photon count Nabs (t, $\lambda$). The absorbed photon count Nabs (t, $\lambda$) is expressed by the following formula.

$$Nabs (t, \lambda) = \alpha \times (1-10^{-Abs\,(t,\,\lambda)}) \times Nirr (\lambda) \cdots (7)$$

In the above-mentioned formula (7), $\alpha$ is a coefficient for correcting an irradiation light reflection component guided from the sample cell 3. The absorbed photon count calculator 370 calculates the absorbed photon count Nabs (t, $\lambda$) using the above-mentioned formula (7) with use of the irradiation photon count Nirr ($\lambda$) calculated by the irradiation photon count calculator 340 and the absorbance spectrum Abs (t, $\lambda$) acquired by the absorbance spectrum acquirer 360 (step S17). Further, the absorbed photon count calculator 370 stores the calculated absorbed photon count Nabs (t, $\lambda$) in the storage 320 (step S18). Thus, the second measuring work is completed.

Next, the work controller 350 determines whether an instruction for ending an operation has been provided by the operation unit 40 (step S19). In a case in which an instruction for ending an operation has not been provided, the work controller 350 returns to the step S1. In a case in which an instruction for performing the standard data acquiring work is not provided in the step S1, the work controller 350 proceeds to the step S5. In a case in which an instruction for performing the first measuring work is not provided in the step S5, the work controller 350 proceeds to the step S12. In a case in which an instruction for performing the second measuring work is not provided in the step S12, the work controller 350 proceeds to the step S19. In a case in which an instruction for ending the work is provided in the step S19, the work controller 350 ends the photoreaction evaluating work.

The quantum yield in a photochemical reaction can be calculated with use of the number of molecules of a substance (atom or molecule) generated by the photochemical reaction in the sample S and an absorbed photon count calculated by the above-mentioned second measuring work. The number of molecules of a substance generated by the photochemical reaction in the sample S is obtained by an analysis of the sample S with use of a gas chromatograph or a liquid chromatograph, for example.

(4) Effects of Embodiment

In the photoreaction evaluation device 100 according to the present embodiment, the first detected intensity distribution E1 obtained with use of the standard light source 1S that generates white light includes a detected intensity at each wavelength in a wide wavelength range, and the radiation characteristics Fstd of the standard light source 1S include a radiation intensity at each wavelength in a wide wavelength range. Therefore, during the first measuring work, it is possible to accurately calculate a radiation intensity at each wavelength in a wavelength range of irradiation light of the irradiation light source 1. Thus, an irradiation photon count at each wavelength in a wavelength range of irradiation light of the irradiation light source 1 can be accurately calculated.

As a result, it is possible to accurately calculate the distribution of an irradiation photon count depending on a wavelength not only in a case in which the irradiation light source 1 that generates light having a specific wavelength is used but also in a case in which the irradiation light source 1 that generates light having a wide wavelength range is used.

Further, because an irradiation photon count at each wavelength in a wavelength range of irradiation light of the irradiation light source 1 is accurately calculated during the first measuring work, it is possible to accurately calculate an absorbed photon count at each wavelength in the wavelength range of the irradiation light of the irradiation light source 1 during the second measuring work.

Further, the first detected intensity distribution E1 acquired during acquisition of standard data is stored in the storage 320. Thus, it is not necessary to detect the first detected intensity distribution E1 using the standard light source 1S during the first measuring work. This saves time and labor required for the first measuring work.

Further, because a white light source is used as the standard light source 1S, light sources that generate light of various wavelengths or in various wavelength ranges can be used as the irradiation light sources 1. Thus, an irradiation photon count at each wavelength of various irradiation light sources 1 can be accurately calculated. Therefore, the number of photons absorbed by the sample S can be accurately calculated with use of light of a desired wavelength.

(5) Other Embodiments

While the position of the sample cell 3 corresponds to the sample position in the above-mentioned embodiment, the sample position is not limited to the position of the sample cell 3 and may be the position of another sample holder or another sample supporter that holds or supports the sample S.

The data processor 30 of the photoreaction evaluation device 100 may be constituted by a personal computer, or may be constituted by a portable electronic terminal such as a smartphone or may be constituted by a server or the like connected to a network.

(6) Aspects

It will be appreciated by those skilled in the art that the exemplary embodiments described above are illustrative of the following aspects.

(Item 1) A photoreaction evaluation device according to one aspect that evaluates photoreaction of a sample arranged at a sample position, may include an irradiation light source arranged to be capable of irradiating the sample position with light as irradiation light and provided to be replaceable with a standard light source that generates white light, a spectrophotometer that includes a measurement light source arranged to be capable of irradiating the sample position with light and a detector arranged to detect an intensity distribution of light that has passed through the sample position, an intensity distribution acquirer that acquires an intensity distribution of light detected by the detector with the sample position at which a sample is not present irradiated with light by the standard light source and with the sample position not irradiated with light by the measurement light source as a first detected intensity distribution, and acquires an intensity distribution of light detected by the detector with the sample position at which a sample is not present irradiated with light by the irradiation light source as irradiation light and with the sample position not irradiated with light by the measurement light source during a first measuring work, a radiation intensity calculator that calculates a radiation intensity at each wavelength of irradiation light of the irradiation light source based on a first detected intensity distribution acquired by the intensity distribution acquirer and a second detected intensity distribution acquired by the intensity distribution acquirer and irradiation characteristics of the standard light source; and an irradiation photon count calculator that calculates a count of photons at each wavelength of irradiation light of the irradiation light source as an irradiation photon count based on a radiation intensity at each wavelength calculated by the radiation intensity calculator.

With the photoreaction evaluation device according to the item 1, the first detected intensity distribution obtained with use of the standard light source is acquired. The radiation characteristics of the standard light source are known. During the first measuring work, an intensity distribution of light detected by the detector with the sample position irradiated with light by the irradiation light source is acquired as the second detected intensity distribution. Further, a radiation intensity at each wavelength of irradiation light of the irradiation light source is calculated based on the acquired first detected intensity distribution, the acquired second detected intensity distribution and the radiation characteristics of the standard light source. Further, the irradiation photon count of the irradiation light source is calculated based on the calculated radiation intensity at each wavelength.

In this case, the first detected intensity distribution obtained with use of the standard light source that generates white light includes a detected intensity at each wavelength in a wide wavelength range, and the radiation characteristics of the standard light source include a radiation intensity at each wavelength in the wide wavelength range. Therefore, during the first measuring work, it is possible to accurately calculate a radiation intensity at each wavelength in a wavelength range of the irradiation light of the irradiation light source. Thus, the irradiation photon count at each wavelength in the wavelength range of the irradiation light of the irradiation light source can be accurately calculated.

As a result, it is possible to accurately calculate a distribution of an irradiation photon count depending on a wavelength not only in a case in which an irradiation light source that generates light having a specific wavelength is used but also in a case in which an irradiation light source that generates light having a wide wavelength range is used.

(Item 2) The photoreaction evaluation device according to item 1, may further include an absorbance spectrum acquirer that acquires an intensity distribution of light detected by the detector with a sample at the sample position irradiated with light by the measurement light source and with a sample at the sample position irradiated with light by the irradiation light source during a second measuring work as an absorbance spectrum, and an absorbed photon count calculator that calculates a count of photons absorbed at each wavelength by a sample as an absorbed photon count based on an irradiation photon count calculated by the irradiation photon count calculator and an absorbance spectrum acquired by the absorbance spectrum acquirer during the second measuring work.

With the photoreaction evaluation device according to the item 2, during the second measuring work, an intensity distribution of light detected by the spectrophotometer with the sample at the sample position irradiated with light by the irradiation light source is acquired as an absorbance spectrum. The absorbed photon count is calculated based on the irradiation photon count and the absorbance spectrum. In this case, during the first measuring work, the irradiation photon count at each wavelength in the wavelength range of the irradiation light of the irradiation light source is accurately calculated. Therefore, it is possible to accurately calculate the absorbed photon count at each wavelength in the wavelength range of the irradiation light of the irradiation light source.

(Item 3) The photoreaction evaluation device according to item 1 or 2, may further include a storage that stores a first detected intensity distribution acquired by the intensity distribution acquirer before the first measuring work and the second measuring work, wherein the intensity distribution acquirer may acquire a first detected intensity distribution stored in the storage during the first measuring work.

With the photoreaction evaluation device according to the item 3, the first detected intensity distribution acquired before the first measuring work and the second measuring work is stored in the storage. Thus, it is not necessary to detect the first detected intensity distribution using the standard light source during the first measuring work. This saves time and labor required for the first measuring work.

(Item 4) The photoreaction evaluation device according to any one of items 1 to 3, wherein a light source that generates white light, monochromatic light or light in a certain wavelength range may be selectively provided as the irradiation light source.

With the photoreaction evaluation device according to item 4, the light sources that generate light of various wavelengths or light in various wavelength ranges can be used as the irradiation light sources. Thus, the photoreaction in regard to various samples can be accurately evaluated with use of light of a desired wavelength.

(Item 5) A photon count calculation method according to another aspect performed in a photoreaction evaluation device that evaluates photoreaction in regard to a sample arranged at a sample position may include the steps of acquiring an intensity distribution of light detected by a detector of a spectrophotometer with the sample position at which a sample is not present irradiated with light by a standard light source that generates white light and with the sample position not irradiated with light by a measurement light source of the spectrophotometer as a first detected intensity distribution, acquiring an intensity distribution of light detected by the detector with the sample position at which a sample is not present irradiated with light by an irradiation light source and with the sample position not irradiated with light by the measurement light source during a first measuring work, calculating a radiation intensity at each wavelength of irradiation light of the irradiation light source based on the acquired first detected intensity distribution, the acquired second detected intensity distribution and radiation characteristics of the standard light source, and calculating a count of photons at each wavelength of irradiation light of the irradiation light source based on the calculated radiation intensity at each wavelength.

With the photon count calculation method according to item 5, the first detected intensity distribution corresponding to the standard light source that generates white light includes a detected intensity at each wavelength in a wide wavelength range, and the radiation characteristics of the standard light source include a radiation intensity at each wavelength in the wide wavelength range. Therefore, during the first measuring work, a radiation intensity at each wavelength in a wavelength range of the irradiation light of the irradiation light source can be accurately calculated. Thus, the irradiation photon count at each wavelength in the wavelength range of the irradiation light of the irradiation light source can be accurately calculated.

As a result, it is possible to accurately calculate a distribution of an irradiation photon count depending on a wavelength not only in a case in which an irradiation light source that generates light having a specific wavelength is used but also in a case in which an irradiation light source that generates light having a wide wavelength range is used.

(Item 6) The photon count calculation method according to item 5, may further include the steps of acquiring an intensity distribution of light generated by the detector with a sample at the sample position irradiated with light by the measurement light source and with a sample at the sample position irradiated with light by the irradiation light source as an absorbance spectrum during a second measuring work, and calculating a count of photons absorbed at each wavelength by a sample as an absorbed photon count based on the calculated irradiation photon count and the acquired absorbance spectrum during the second measuring work.

With the photon count calculation method according to the item 6, the irradiation photon count at each wavelength is accurately calculated during the first measuring work. Therefore, during the second measuring work, the absorbed photon count at each wavelength of the irradiation light of the irradiation light source can be accurately calculated.

**Claims**

1.  A photoreaction evaluation device that evaluates photoreaction of a sample arranged at a sample position, comprising:

    an irradiation light source arranged to be capable of irradiating the sample position with light as irradiation light and provided to be replaceable with a standard light source that generates white light;
    a spectrophotometer that includes a measurement light source arranged to be capable of irradiating the sample position with light and a detector arranged to detect an intensity distribution of light that has passed through the sample position;
    an intensity distribution acquirer that acquires an intensity distribution of light detected by the detector with the sample position at which a sample is not present irradiated with light by the standard light source and with the sample position not irradiated with light by the measurement light source as a first detected intensity distribution, and acquires an intensity distribution of light detected by the detector with the sample position at which a sample is not present irradiated with light by the irradiation light source as irradiation light and with the sample position not irradiated with light by the measurement light source during a first measuring work;
    a radiation intensity calculator that calculates a radiation intensity at each wavelength of irradiation light of the irradiation light source based on a first detected intensity distribution acquired by the intensity distribution acquirer and a second detected intensity distribution acquired by the intensity distribution acquirer and irradiation characteristics of the standard light source; and
    an irradiation photon count calculator that calculates a count of photons at each wavelength of irradiation light of the irradiation light source as an irradiation photon count based on a radiation intensity at each wavelength calculated by the radiation intensity calculator.

2.  The photoreaction evaluation device according to claim 1, further comprising:

    an absorbance spectrum acquirer that acquires an intensity distribution of light detected by the detector with a sample at the sample position irradiated with light by the measurement light source and with a sample at the sample position irradiated with light by the irradiation light source during a second measuring work as an absorbance spectrum; and
    an absorbed photon count calculator that calculates a count of photons absorbed at each wavelength by a sample as an absorbed photon count based on an irradiation photon count calculated by the irradiation photon count calculator and an absorbance spectrum acquired by the absorbance spectrum acquirer during the second measuring work.

3.  The photoreaction evaluation device according to claim 1 or 2, further comprising a storage that stores a first detected intensity distribution acquired by the intensity distribution acquirer before the first measuring work and the second measuring work, wherein
    the intensity distribution acquirer acquires a first detected intensity distribution stored in the storage during the first measuring work.

4.  The photoreaction evaluation device according to any one of claims 1 to 3, wherein
    a light source that generates white light, monochromatic light or light in a certain wavelength range is selectively provided as the irradiation light source.

5. A photon count calculation method performed in a photoreaction evaluation device that evaluates photoreaction in regard to a sample arranged at a sample position including the steps of:

acquiring an intensity distribution of light detected by a detector of a spectrophotometer with the sample position at which a sample is not present irradiated with light by a standard light source that generates white light and with the sample position not irradiated with light by a measurement light source of the spectrophotometer as a first detected intensity distribution;

acquiring an intensity distribution of light detected by the detector with the sample position at which a sample is not present irradiated with light by an irradiation light source and with the sample position not irradiated with light by the measurement light source during a first measuring work;

calculating a radiation intensity at each wavelength of irradiation light of the irradiation light source based on the acquired first detected intensity distribution, the acquired second detected intensity distribution and radiation characteristics of the standard light source; and

calculating a count of photons at each wavelength of irradiation light of the irradiation light source based on the calculated radiation intensity at each wavelength.

6. The photon count calculation method according to claim 5, further including the steps of:

acquiring an intensity distribution of light generated by the detector with a sample at the sample position irradiated with light by the measurement light source and with a sample at the sample position irradiated with light by the irradiation light source as an absorbance spectrum during a second measuring work; and

calculating a count of photons absorbed at each wavelength by a sample as an absorbed photon count based on the calculated irradiation photon count and the acquired absorbance spectrum during the second measuring work.

FIG. 1

EP 4 109 075 A1

F I G. 2

13

FIG. 3

```
                    ┌──────────────────────┐
                    │        START         │
                    └──────────────────────┘
                                │
    ┌───────────────────────────┤
    │                           ▼
    │  S1 ⟨ HAS INSTRUCTION FOR                    ⟩ NO
    │     ⟨ PERFORMING STANDARD DATA               ⟩──────┐
    │     ⟨ ACQUIRING WORK BEEN PROVIDED?          ⟩      │
    │                           │ YES                     │
    │  S2 ┌──────────────────────────────┐                │
    │     │     STANDARD LIGHT SOURCE     │                │
    │     │ IRRADIATES SAMPLE CELL WITH LIGHT │            │
    │     └──────────────────────────────┘                │
    │                           │                          │
    │  S3 ┌──────────────────────────────┐                │
    │     │     ACQUIRE FIRST DETECTED    │                │
    │     │     INTENSITY DISTRIBUTION    │                │
    │     └──────────────────────────────┘                │
    │                           │                          │
    │  S4 ┌──────────────────────────────┐                │
    │     │      STORE FIRST DETECTED     │                │
    │     │     INTENSITY DISTRIBUTION    │                │
    │     └──────────────────────────────┘                │
    │                           │◄─────────────────────────┘
    │  S5 ⟨ HAS INSTRUCTION FOR                    ⟩ NO
    │     ⟨ PERFORMING FIRST MEASURING             ⟩──────┐
    │     ⟨ WORK BEEN PROVIDED?                     ⟩      │
    │                           │ YES                     │
    │  S6 ┌──────────────────────────────┐                │
    │     │   IRRADIATION LIGHT SOURCE    │                │
    │     │     IRRADIATES SAMPLE CELL    │                │
    │     │           WITH LIGHT          │                │
    │     └──────────────────────────────┘                │
    │                           │                          │
    │  S7 ┌──────────────────────────────┐                │
    │     │    ACQUIRE SECOND DETECTED    │                │
    │     │     INTENSITY DISTRIBUTION    │                │
    │     └──────────────────────────────┘                │
    │                           │                          │
    │  S8 ┌──────────────────────────────┐                │
    │     │     STORE SECOND DETECTED     │                │
    │     │     INTENSITY DISTRIBUTION    │                │
    │     └──────────────────────────────┘                │
    │                           │                          │
    │  S9 ┌──────────────────────────────┐                │
    │     │    CALCULATE IRRADIATION      │                │
    │     │    INTENSITY OF IRRADIATION   │                │
    │     │           LIGHT SOURCE        │                │
    │     └──────────────────────────────┘                │
    │                           │                          │
    │ S10 ┌──────────────────────────────┐                │
    │     │     CALCULATE IRRADIATION     │                │
    │     │         PHOTON COUNT          │                │
    │     └──────────────────────────────┘                │
    │                           │                          │
    │ S11 ┌──────────────────────────────┐                │
    │     │  STORE IRRADIATION PHOTON COUNT │             │
    │     └──────────────────────────────┘                │
    │                           │                          │
    ▼                           ▼                          ▼
   (C)                         (A)                        (B)
```

F I G. 4

(C)        (A)        (B)

S12 — HAS INSTRUCTION FOR PERFORMING SECOND MEASURING WORK BEEN PROVIDED?  NO

YES

S13 — MEASUREMENT LIGHT SOURCE OF SPECTROPHOTOMETER IRRADIATES SAMPLE WITH MEASUREMENT LIGHT

S14 — IRRADIATION LIGHT SOURCE IRRADIATES SAMPLE WITH EXCITATION LIGHT

S15 — ACQUIRE ABSORBANCE SPECTRUM

S16 — STORE ABSORBANCE SPECTRUM

S17 — CALCULATE ABSORBED PHOTON COUNT

S18 — STORE ABSORBED PHOTON COUNT

S19 — HAS INSTRUCTION FOR ENDING WORK BEEN PROVIDED?

NO

YES

END

F I G. 5

2    3    1S

| SPECTROPHOTOMETER | | STANDARD LIGHT SOURCE |

F I G. 6

E1

DETECTED
INTENSITY

WAVELENGTH[ $\lambda$ ]

F I G. 7

```
2                          3                      1
SPECTROPHOTOMETER        [   ]        IRRADIATION
                                      LIGHT SOURCE
```

F I G. 8

E2

DETECTED
INTENSITY

WAVELENGTH[ λ ]

F I G.  9

FIRST DETECTED
INTENSITY

E1i

E1

WAVELENGTH
[λ]

SECOND DETECTED
INTENSITY

E2i

E2

WAVELENGTH
[λ]

## INTERNATIONAL SEARCH REPORT

| | International application No. |
|---|---|
| | PCT/JP2020/036556 |

A. CLASSIFICATION OF SUBJECT MATTER
Int. Cl. G01N21/2(2006.01)i, G01N21/64(2006.01)i
FI: G01N21/64 Z, G01N21/27 Z

According to International Patent Classification (IPC) or to both national classification and IPC

B. FIELDS SEARCHED

Minimum documentation searched (classification system followed by classification symbols)
Int. Cl. G01N21/00-21/83, G01J1/00-3/52

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2019-128202 A (HAMAMATSU PHOTONICS KABUSHIKI KAISHA) 01 August 2019, entire text, all drawings | 1-6 |
| A | JP 2001-60010 A (FUJI XEROX CO., LTD.) 06 March 2001, entire text, all drawings | 1-6 |
| A | CN 108033977 A (SHANGHAI UNIVERSITY OF TECHNOLOGY) 15 May 2018, entire text, all drawings | 1-6 |
| A | US 2010/0029952 A1 (KENT STATE UNIVERSITY) 04 February 2010, entire text, all drawings | 1-6 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16.10.2020 | 02.11.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2020/036556

| Patent Documents referred to in the Report | Publication Date | Patent Family | Publication Date |
|---|---|---|---|
| JP 2019-128202 A | 01.08.2019 | WO 2019/146173 A2 entire text, all drawings TW 201932824 A entire text, all drawings | |
| JP 2001-60010 A | 06.03.2001 | (Family: none) | |
| CN 108033977 A | 15.05.2018 | (Family: none) | |
| US 2010/0029952 A1 | 04.02.2010 | US 2012/0190098 A1 entire text, all drawings | |

Form PCT/ISA/210 (patent family annex) (January 2015)

**REFERENCES CITED IN THE DESCRIPTION**

**Patent documents cited in the description**

- JP 2015034717 A